# EUROPEAN PATENT APPLICATION

(11) **EP 1 770 075 A1**
(43) Date of publication of application: **04.04.2007**
(21) Application number: 05405567.8
(22) Date of filing: 03.10.2005
(51) Int. Cl.: C04B 35/584, C04B 35/593, B23B 27/14

(54) **Ceramic matrix composite cutting blade for wood machining and the method of manufacturing the cutting blade**

(71) Applicant: Oertli Werkzeuge AG, 8181 Höri bei Bülach (CH)
(72) Inventor: Eblagon, Fernardo A., 8600 Dübendorf (CH); Kübler, Jakob J., 8600 Dübendorf (CH); Ehrle, Bruno, 8215 Hallau (CH)
(74) Representative: Riederer, Conrad A.

(57) **Abstract**

A Cutting blade for wood machining consisting of a matrix composite comprising silicon nitride, 10 wt%to 50 wt% silicon carbide or titanium nitride, and 4 wt% to 10 wt% lanthana-yttria garnet or yttria-alumina garnet has been found to have a long edge life. A method of manufacturing comprises the steps of mixing a powder of said materials in a liquid, adding a binder, drying the mixture, sieving the dried mixture, sintering the mixture under pressure, hot isostatically pressing, grinding, polishing and annealing.

## Description

The invention refers to ceramic matrix composite cutting blade and the method of manufacturing the cutting blade.

Today's woodworking industry requires high speeds for cutting and high quality surface finish all in one operation and at competitive costs.

Wood-cutting is a highly demanding application for cutting materials, i.e.:
- Due to the nature of wood, in order to obtain a high quality finish on the cut surface, the tool must have a very sharp cutting edge, i.e. the cutting edge should have a radius of 5 µm or less, ideally 1 µm [Samuel J. Schneider, Jr., vol. chairman, Engineering Materials Handbook -Volume 4 - Ceramics and glasses, ASM International, 1992].
- Woodworking tools require a larger rake angle than metal-working tools. Accordingly, the wedge angle will be quite small, usually about 40° to 55°. This increases the danger of early cutting edge chipping. Damaged edges leave marks on the machined surface of the wooden work piece, thus requiring replacement of the blade.
- Acids, hydrocarbons and tannins contained in the wood generate a corrosive environment in the cutting area. Inorganics can also be found in the wood such as potassium, calcium, magnesium and silicon in the case of some tropical woods [D. Fangel and G. Wegener, Wood - Chemistry, Ultrastructure, Reactions, Walter de Gruyter, Berlin,1984].
- High temperatures are generated at the cutting edge (between 400°C and 800°C) and no cooling can be used in this operation apart from air since any liquid would affect the surface quality of the wood [Sheikh-Ahmad et al., Experimental and numerical method for determining temperature distribution in a wood cutting tool, Experimental heat transfer, 16 (2003) 255-271].
- Wood is an orthotropic material with an inhomogeneous structure which includes knots and sand entrapments.
- The use of wear resistant coatings such as diamond like coating is restricted due to the small radius required on the cutting edge. Coatings can increase the edge radius from ca. 1 µm to values of up to 20 µm [A. Flöter, Verbesserung der Schneidfähigkeit von Diamant, 10. Treffen Industrie-Arbeitkreis CVD-Diamant-Werkzeuge, March 2004-Berlin (2004) 1-9].

The standard material used in the industry for high volume planing and cutting of wood or wood chip panels is tungsten carbide. Tungsten carbide is liquid phase sintered with a metallic binding phase usually formed with cobalt, or a cobalt alloy. The amount of the metal binding phase affects the hardness, corrosion resistance, fracture toughness and rigidity of the composite. Hardness and wear resistance are also affected by the grain size of the carbide phase [Samuel J. Schneider, Jr., vol. chairman, Engineering Materials Handbook -Volume 4 - Ceramics and glasses, ASM International, 1992].

Particle size in tungsten carbide grades vary between 0.3 µm and 40 µm. Wood machining grades have an average particle size of ~0.5 µm, which is ideal for producing sharp cutting edges for this application [L. J. Prakash, Application of Fine Grained Tungsten Carbide Based Cemented Carbides, International Journal of Refractory Materials, 13 (1905) 257-64]. Tungsten carbide also shows a high thermal conductivity which aids in dissipating heat away from the cutting edge. Due to the metallic nature of the binder phase of this composite, tungsten carbide shows an outstanding fracture toughness which coupled with its high hardness allows it to deal with inclusions and knots [Samuel J. Schneider, Jr., vol. chairman, Engineering Materials Handbook -Volume 4 - Ceramics and glasses, ASM International, 1992].

Tungsten carbide cutting tools last longer than traditional high strength steel tools, but high strength steel tools are preferred when a very high quality finish is required. In spite of the longer service life of tungsten carbide cutting tools, the metallic binding phase in the tungsten carbide composite reacts with tannic acids found in the wood. This chemical reaction is believed to leach out the cobalt binder and to leave the tungsten carbide grains exposed and prone to detachment during the wood machining operation [J.A. Baily, A-M. Bayoumi, J. S. Stewart, Wear of some cemented carbide tool in machining oak, Waer, 85 (1983) 69-79].

A high wear resistance is desired for cutting tools, and materials with high hardness, toughness and high strength at elevated temperatures are most resistant to abrasive wear [D. R. Askeland and P. P. Phulé, The science and engineering of materials - 4th ed., Thomson - Brookscole, 2003]. Silicon nitride ceramics show a higher hardness than hardmetal. This and other properties can be further improved by the addition of a secondary phase. According to Huang et al. [J-L. Huang, M-T. Lee, H-H. Lu, D-F. Lii, Microstructure, fracture behaviour and mechanical properties of TiN/Si3N4 composites, Materials Chemistry and Physics, 45 (1996) 203-210], TiN additions can increase the fracture toughness by ~35% by different crack deflection mechanisms, although lower values have been reported by Blugan et al. [G. Blugan, M. Hadad, J. Jenczak-Rusch, J. Kuebler, T. Graule, Fractography, mechanical properties, and microstructure of commercial silicon nitride-titanium nitride composites, Journal of the American Ceramic Society, 88 [4] (2005) 926-933]. A fracture toughness increase has also been observed when adding SiC to a Si3N4 matrix [J. Hong, H. Jingyan, X. Zhihua, Study of SiC particle reinforced and toughened silicon nitrid base ceramic cutting tool material, Rare Metal Materials and Engineering, 28-3 (1999) 182-185].

It has been observed that yttria and lanthana sintering additives, when compared to other oxides, give the highest aspect ratio to the β-silicon nitride grains and thereby increasing the fracture toughness of Si3N4 [Samuel J. Schneider, Jr., vol. ohainnan. Engineering Materials Handbook -Volume 4 - Ceramics and glasses.ASM International, 1992]. A weaker glassy phase such as that resulting from the addition of lanthanum or neodymium promotes intergranular crack propagation which increases the fracture toughness of the material [M. J. Hoffmann, H. Gu and R. M. Cannon, Influence of the interfacial properties on the microstrucural development and properties of silicon nitrid ceramics, Materials Research Society Symposium Proceedings, 586 (2000) 65-74]. Furthermore, yttria/lanthana garnets (YLaG) in different compositions have been shown to produce a higher melting point glassy phase than those observed with yttria/alumina (YAG) or aluminium nitride/yttria garnets. This increase in the melting temperature increases the strength of the material at high temperatures and the maximum service temperature [M. Kitiyama, K. Hirao and S. Kanzaki, Thermal conductivity of beta-Si3N4: I, Effects of various microstructural factors, Journal of the American Ceramic Society, 82 [11] (1999) 3105-12]. Under certain sintering conditions, the YLaG produced a higher aspect ratio β-Si3N4 grain microstructure than the YAG whilst keeping a fine microstructure. Even though a fine microstructures is in general known to be detrimental to the fracture toughness of silicon nitride [P. F. Becher et al.,Microstructural Design of Silicon Nitride with Improved Fracture Toughness: I, Effects of Grain Shape and Size, J. Am. Ceram. Soc., 81 [11] (1998) 2821-30] a small grain size is required in order to produce a sharp cutting edge.

Other properties such as the thermal conductivity can be modified by tailoring either the microstructure or the glassy phase composition. The thermal conductivity increases steeply with increasing grain size until it reaches almost constant values above a certain critical grain size. However, as mentioned before, a small radius is necessary on the cutting edge in order to produce a high quality finish on the wood surface. In order to produce a cutting radius of 1 µm, the grain size of the starting material should be 1 µm or smaller.

It is an object of the present invention to provide for wood machining a ceramic matrix composite cutting blade with a long edge life.

Accordingly, the present invention provides a ceramic matrix composite cutting blade for wood machining comprising
- silicon nitride,
- 10 to 50 wt% silicon carbide or titanium nitride, and
- 4 to 10 wt% lanthana-yttria garnet or yttria-alumina garnet.

Tests have shown that the edge life of such a blade is up to three times longer than the edge life of a conventional blade of tungsten carbide.

A composite comprising
- silicon nitride,
- 30 wt% silicon carbide, and
- 3 wt% to 5 wt% lanthana-yttria garnet has been found to give a good balance between hardness and fracture toughness. The yttria/lanthana sintering aid allows the production of a very fine grained microstructure having a strong impact on the fracture toughness.

The present invention provides also a method of manufacturing ceramic composite cutting blades for wood machining, characterised by
- the step of mixing a powder comprising
   - Silicon nitride,
   - 10 wt% to 50 wt% silicon carbide or titanium nitride, and
   - 4 wt% to 10 wt% lanthana-yttria garnet or yttria-alumina garnet, in a liquid, thus producing a slurry,
- the step of adding a binder into the slurry and mixing it with the slurry,
- the step of drying the mixture,
- the step of sieving the dried mixture,
- the step of sintering the mixture under pressure in an oxygen-free atmosphere,
- the step of hot isostatically pressing and
- the steps of grinding and polishing.

For manufacturing the ceramic matrix composite fine-grained silicon nitride was used for the first phase and fine grained carbide for the second phase. The weight percentages of the second phase were in the range of 10 wt% to 50 wt%. As sintering aids served alumina, lanthana and yttria in the amount of 4% to 10% of weight. It was found that yttria/lanthana allows production of a very fine grained microstructure without having detrimental effects on the fracture toughness. The powders were mixed in a solution to form a slurry and then milled. After milling a binder solution was added to the slurry and homogenised. The slurry was then dried and sieved. Sintering then took place in a nitrogen or argon atmosphere at the temperatures ranging from 1600°C to 1800°C and pressures from 10 to 30 Mpa. The dwell time was dependent on the temperature and ranged between 5 to 90 minutes. The sintered material was hot isostatically pressed prior to the production of the cutting blades by grinding and polishing. Polishing took place in three steps with 15µm, 6µm and 1µm diamond pastes. The finished tools were then heat treated at 1200°C for a period of time depending on the size of the defects caused by grinding and polishing. It was found that heat treatment, so called annealing, is of importance for a long edge life of the blades.

Some additional details concerning manufacturing may be mentioned.

Isopropanol was used to produce the slurry.

The milling took place in a planetary mill at 200 rpm for 4 hours. As milling media alumina balls of 3 mm diameter were used in a container having an alumina lining. As binder served an isopropanol solution of Movital B30 PVB binder (Clariant Germany) in the amount of 0,5 wt % of the powder mixture. Sieving took place with a 100 µm sieve.

## Claims

1. Ceramic matrix composite cutting blade for wood machining comprising
- silicon nitride,
- 10 to 50 wt% silicon carbide or titanium nitride, and
- 4 to 10 wt% lanthana-yttria garnet or yttria-alumina garnet.

2. Ceramic matrix composite cutting blade according to claim 1 **characterised in that** it comprises
- silicon nitride,
- 30 wt% silicon carbide, and
- 3 to 5 wt% lanthana-yttria garnet.

3. Method of manufacturing ceramic matrix composite cutting blade for wood machining **characterised by**
- the step of mixing a powder comprising
- silicon nitride,
- 10 wt% to 50 wt% silicon carbide or titanium nitride, and
- 4 wt% to 10 wt% lanthana-yttria garnet or yttria-alumina garnet, in a liquid, thus producing a slurry,
- the step of adding a binder into the slurry and mixing it with the slurry,
- the step of drying the mixture,
- the step of sieving the dried mixture,
- the step of sintering the mixture under pressure in an oxygen-free atmosphere,
- the step of hot isostatically pressing and
- the steps of grinding and polishing.

4. Method according to claim 3 **characterised in that** isopropanol is used as liquid for mixing the powder.

5. Method according to claim 3 or 4, **characterised in that** mixing takes place in a planetary mill for 3 to 5, preferably 4 hours.

6. Method according to one of the claims 3 to 5, **characterised in that** the sieving of the dried mixture is made with a 100 µm sieve.

7. Method according to one of the claims 3 to 6, **characterised in that** sintering takes place at 1600 to 1850 °C and about 10 to 30 Mpa pressure for about 5 to 90 minutes.

8. Method according to one of the claims 3 to 8, **characterised in that** the oxygen-free atmosphere is nitrogen or argon atmosphere.

9. Method according to one of the claims 3 to 9, **characterised in that** polishing is made in several, preferably three, stages using diamond pastes with grain sizes in the order of 15 to 1 µm.

10. Method according to one of the claims 3 to 9, **characterised by** the further steps of annealing

11. Method according to one of the claim 11, **characterised in that** annealing takes place in an nitrogen atmosphere.
